Europäisches Patentamt

(19) European Patent Office

Office européen des brevets

(11) Publication number: **0 014 510**
**B1**

(12) **EUROPEAN PATENT SPECIFICATION**

(45) Date of publication of patent specification: **15.09.82**

(51) Int. Cl.³: **G 02 B 7/26**

(21) Application number: **80200091.9**

(22) Date of filing: **01.02.80**

(54) Optical coupling device.

(30) Priority: **02.02.79 NL 7900881**

(43) Date of publication of application:
**20.08.80 Bulletin 80/17**

(45) Publication of the grant of the patent:
**15.09.82 Bulletin 82/37**

(84) Designated Contracting States:
**BE DE FR GB IT SE**

(56) References cited:
**GB - A - 1 017 354**
**US - A - 4 021 099**

(73) Proprietor: **Staat der Nederlanden (Staatsbedrijf der Posterijen, Telegrafie en Telefonie)**
**P.O. Box 430**
**NL-2260 AK Leidschendam (NL)**

(72) Inventor: **De Blok, Cornelis Maria**
**NL-2381 AK Zoeterwoude**
**NL (NL)**

Courier Press, Leamington Spa, England.

Optical coupling device.

The invention relates to a coupling device for time-modulated optical transmission signals, comprising a first light guide for transmitting a first signal, a second light guide for receiving the signal from the first light guide and for reflecting a second signal, and means for receiving the second signal after having emerged from the second light guide.

Devices of this type can be used as optical terminating sets and are utilized among other things to gather knowledge about the attenuation characteristics of light guides for transmission purposes. With a view to getting back the largest signal possible the energy radiated into the second light guide will have to be relatively large. On the other hand a detector for the signal emerging from the second light guide will have to be sensitive to perceive weak signals as well. An attendant problem is that when coupling in the energy radiation received, reflections will occur in the coupling area. These reflections are reflected directly into the sensitive detector, in consequence of which the detector can be easily damaged.

In the Netherlands patent application 7804681 a solution is offered for said problem in that radiation takes place at an angle via a semi-transparent mirror which branches off the signal to be detected. The reflections of the signal transmitted fall outside the mirror and are therefore not received in the detector. A drawback of this method is that both the signal transmitted and the signal received are at an angle with the longitudinal axis of the light guide resulting in relatively great input and output coupling attenuations.

The object of the invention is to provide a device which has the drawbacks described above to a considerably less extent.

Another object of the invention is to provide an optical terminating set having a low transmission loss and a high crosstalk attenuation as compared with similar known circuits.

Said objects as well as other objects are realized by the invention because of the fact that in a coupling area between the adjacent first and second light guide the cross-sectional area of the core of the first light guide is smaller than the cross-sectional area of the core of the second light guide, the second optical signal, after having emerged from the difference area, being supplied to the receiving means.

The invention will now be further elucidated with the aid of the drawing in which

Fig. 1 shows a diagrammatic representation of a coupling device according to the invention;

Fig. 2 represents a second possible embodiment of the device according to the invention;

Fig. 3 represents an embodiment of a coupling device according to Fig. 1.

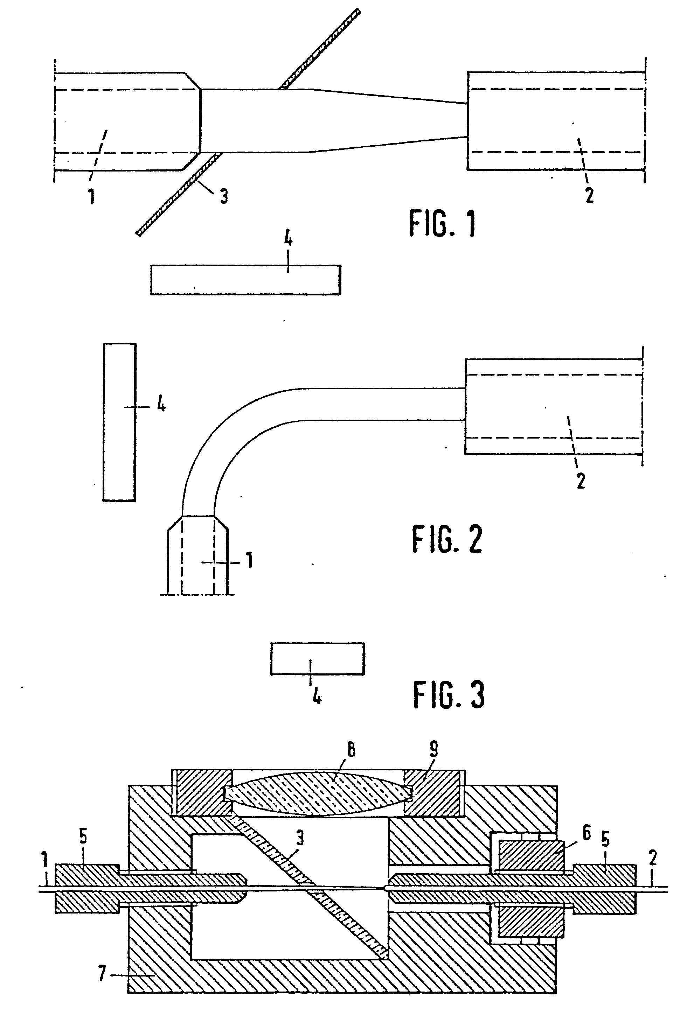

In Fig. 1 number 1 represents a light guide from which the optical signal is supplied to a second light guide 2. At the tangent plane of the light guides 1 and 2 the light guide 1 has a considerably smaller cross section than the light guide 2. In a preferred embodiment the cross section of the core of the light guide 1 is 50 per cent of the cross section of the core of the light guide 2. The optical signal emerging from the light guide 2 reaches a detector 4 via a mirror 3 located around the light guide 1. The strength of the light signal emerging from the light guide 2 depends among other things on the ratio of the cross sections of the cores of the light guides 1 and 2 in the coupling area. At the top this ratio is limited by the desired attenuation between the amount of light reflected from the light guide 2 into the light guide 1 and the amount of light received in the detector 4. At the bottom the ratio of the cross sections of the cores is limited because of the fact that, when the cross section of the conical light guide 1 in the coupling area becomes too small, the numerical aperture of this conical light guide will become so large that in case of radiation into the light guide 2 the losses will be too great. The coupling between the light guides 1 and 2 can be realized by means of a suited sort of glue. In the embodiment the conicalness of the light guide 1 has been achieved by periodically dipping this light guide into an acid, in this case ammonium bifluoride, for some time. It is important that the surface of the conical end is smooth to prevent the optical signal from emerging prematurely. The inclination of the conical end of the light guide 1 depends on the sort of light guide used.

In a suited embodiment the core diameter is 65 $\mu$m, the diameter of the coupling area 30 $\mu$m and the length of the conical end $\pm$7.5 mm. It is self-evident that it is also possible to use two light guides of unequal cross sections allowing the conical end to be dispensed with.

The mirror 3 can be of a piece with a little hole in the mirror surface. It is simpler, however, to use a mirror consisting of two parts in case the substrate is difficult to work. Instead of a plane mirror the mirror can also have a hollow shape, so that no lens is needed. The distance between the coupling area and the mirror is not particularly critical. If the distance is too small, the hole in the mirror plays too great a part. A great distance between the coupling area and the mirror reduces the influence of the hole, but the drawback is that the part of the light guide 1 which is not supported will be large.

Fig. 2 shows another possible embodiment of the device according to the invention. This embodiment does not make use of a mirror and is therefore economically attractive with regard to the embodiment according to Fig. 1.

Fig. 3 shows a possible embodiment of the device according to the invention of which Fig. 1 gives a more diagrammatic representation. The light guides 1 and 2 are each mounted in a holder 5. The holder 5 of the light guide 2 is mounted in the housing 7 via a clamping screw 6, which is radially adjustable with regard to the light guide axis. A lens 8 mounted in a lens mount 9 is located over the mirror 3. The detector 4 can be directly connected to the lens mount 9, thus allowing the receiving part to be removed in its entirety. Another possibility is to mount a third holder for a light guide instead of the detector 4, so that the optical signal reflected from the light guide 2 can be radiated into a third light guide via the mirror 3. In this way an optical terminating set is obtained.

When the cross-sectional ratio of the cores of the light guides 1 and 2 is 4 in the coupling area, the optical attenuation of the signal radiated by the light guide 2 to the detector 4 will be smaller than 3 dB. In this embodiment the optical attenuation of the signal directly radiated to the detector 4 by the light guide 1 is >30 dB. This offers the possibility of utilizing a sensitive detector, which will not be overloaded by the strong signal transmitted from the light guide 1.

## Claim

Coupling device for time-modulated optical transmission signals, comprising a first light guide (1) for transmitting a first signal, a second light guide (2) for receiving the signal from the first light guide and for reflecting a second signal, and means (4) for receiving the second signal after having emerged from the second light guide, characterized in that in the coupling area between the adjacent first and second light guide the cross-sectional area of the core of the first light guide (1) is smaller than the cross-sectional area of the core of the second light guide (2), the second optical signal, being supplied to the receiving means after having emerged from the resulting difference cross sectional area.

## Revendication

Dispositif de couplage pour signaux de transmission optique modulés dans le temps, comprenant un premier guide de lumière (1) destiné à transmettre un premier signal, un deuxième guide de lumière (2) destiné à recevoir le signal venant du premier guide de lumière et à réfléchir un deuxième signal, et des moyens (4) destiné à recevoir le deuxième signal après qu'il est sorti du deuxième guide de lumière, caractérisé en ce que, dans l'aire de couplage entre le premier et le deuxième guide de lumière adjacents, l'aire en section droite de l'âme du premier guide de lumière (1) est plus petite que l'aire en section droite de l'âme du deuxième guide de lumière (2), le deuxième signal optique étant fourni aux moyens de réception après qu'il est sorti de l'aire de sections droites de différence résultante.

## Patentanspruch

Koppelvorrichtung für zeitmodulierte optische Übertragungssignale, die einen ersten Lichtwellenleiter (1) für das Senden eines ersten Signals, einen zweiten Lichtwellenleiter (2) für die Aufnahme des Signals des ersten Lichtwellenleiters und das Zurückstrahlen eines zweiten Signals sowie Mittel (4) für den Empfang des zweiten Signals, nach dem Austritt aus dem zweiten Lichtwellenleiter, besitzt, dadurch gekennzeichnet, dass in der Koppelfläche zwischen dem sich berührenden ersten und zweiten Lichtwellenleiter die Kernquerschnittfläche des ersten Lichtwellenleiters (1) kleiner ist als die des zweiten Lichtwellenleiters (2) und dass das zweite optische Signal nach dem Austritt aus der sich ergebenden Differenzquerschnittfläche den Empfangsmitteln zugeführt wird.

FIG. 1

FIG. 2

FIG. 3